(19) Europäisches Patentamt
European Patent Office
Office européen des brevets

(11) Publication number: **0 180 354**
**A1**

(12) **EUROPEAN PATENT APPLICATION**

(21) Application number: 85307240.3

(22) Date of filing: 10.10.85

(51) Int. Cl.[4]: C10G 45/64, B01J 29/34

(30) Priority: 29.10.84 US 665605

(43) Date of publication of application: 07.05.86 Bulletin 86/19

(84) Designated Contracting States: BE DE FR GB IT NL

(71) Applicant: MOBIL OIL CORPORATION
150 East 42nd Street
New York New York 10017(US)

(72) Inventor: Angevine, Philip Jay
10 Kent Court
West Deptford New Jersey 08051(US)
Inventor: Oleck, Stephen Michael
241 Williams Avenue
Moorestown New Jersey 08057(US)
Inventor: Mitchell, Kenneth Michael
740 Cornwallis Drive
Mt. Laurel New Jersey 08054(US)
Inventor: Shih, Stuart Shan-San
7 Abinger Lane
Cherry Hill New Jersey 08003(US)

(74) Representative: West, Alan Harry
Mobil Court 3 Clements Inn
London WC2A 2EB(GB)

(54) **Process for hydrotreating and dewaxing petroleum feedstocks.**

(57) A process for simultaneously hydrotreating and dewaxing distillate petroleum fractions boiling above 260°C is described. The process utilizes a single catalyst system, which includes a hydrogenation component on a support of 0.5 t0 30 wt % Zeolite Beta and 99.5 to 70 wt % inorganic oxide.

EP 0 180 354 A1

# PROCESS FOR HYDROTREATING AND DEWAXING PETROLEUM FEEDSTOCKS

This invention is directed to a process for simultaneously denitrogenating, desulfurizing and dewaxing petroleum feedstocks to produce upgraded products of lower pour point.

It is well known that many, if not most, petroleum base stocks contain contaminants, such as, for example, sulfur, nitrogen and metals. It is desirable, particularly if these feedstocks are to be further processed, that the contaminants be removed. This is an operation usually requiring the use of a catalyst.

It is known in the art to effect sulfur removal from hydrocarbon stocks by subjecting them to treatment with hydrogen at elevated temperatures and pressures while in contact with a catalyst containing hydrogenating components. Typically, the hydrogenating components of such prior art catalysts are Group VIA or Group VIII metals, or their oxides or sulfides. These hydrogenating components may be supported on a variety of well known carriers, for example, alumina, kieselguhr, zeolitic molecular sieves and other materials having high surface areas; see in this regard U. S. Patent No. 4,080,296. U. S. Patent No. 3,546,103 teaches hydrodesulfurization with a catalyst of cobalt and molybdenum on an alumina base. U. S. Patent No. 3,755,145 describes a process for preparing lube oils characterized by low pour points, which utilizes a catalyst mixture comprising hydrogenation components, a conventional cracking catalyst which can be either crystalline or amorphous and a crystalline aluminosilicate having a Constraint Index of 1 to 12.

U. S. Patent No. 3,894,938 relates to the catalytic dewaxing and desulfurization of high pour point, high sulfur gas oils to lower their sulfur content by contacting the oil with a zeolite hydrodewaxing catalyst having a Constraint Index of 1 to 12 which may contain a hydrogenation/dehydrogenation component in the presence or absence of added hydrogen, followed by conventional hydrodesulfurization processing of the dewaxed intermediate.

U. S. Patent No. 4,458,024 describes a process for hydrotreating and dewaxing petroleum residua with a catalyst which includes a zeolite having a Constraint Index of 1 to 12, a hydrogenation component and alumina.

U. S. Patent No. 4,411,770 describes a process for the hydroconversion of heavy hydrocarbon oils, wherein the catalyst comprises a zeolite having a Constraint Index of 1 to 12 or Na-Beta component and a metallic hydrogenation component.

U.S. 4,419,220 discloses isomerization dewaxing using a catalyst of zeolite beta and a hydrogenation/dehydrogenation component on a support.

Despite the many improvements which have been made, it would be beneficial if a process were available which would permit the efficient and simultaneous hydrotreating and dewaxing of petroleum feedstocks.

Accordingly, the present invention provides a process for simultaneously denitrogenating, desulfurizing and dewaxing a distillable petroleum feed having nitrogen compound, waxy components and a sulfur content of at least 1.0 wt% and a boil above 260°C by contacting the feed with a catalyst comprising a support of 0.5 to 30 wt% Zeolite Beta and 99.5 to 70 wt% of an inorganic oxide; and a hydrogenation/dehydrogenation component of 6 to 25 wt%, based on total catalyst weight and expressed in elemental form, of at least one Group VIII metal selected from iron, cobalt and nickel and at least one Group VIA metal, and converting less than 15% of the feed to lighter materials, to produce a liquid product with reduced wax, nitrogen and sulfur content.

Fig. 1 is a flow diagram of a single stage desulfurization, denitrogenation and dewaxing process using the catalyst of the present invention.

Fig. 2 is a flow diagram of a single stage process of the present invention.

Fig. 3 is a flow diagram of a Moderate-Pressure Hydrocracking Process (MPHC) using the process of the present invention.

The present invention is based in part on the discovery that formulating a catalyst system comprising a hydrogenation component, which includes at least one metal selected from Group VIA and Group VIII of the periodic Table; Zeolite Beta; and an inorganic oxide support, preferably alumina, so as to obtain a product having 90% of its pore volume in pores no greater than 100 Angstrom (A) units in diameter, makes it possible to carry out hydrotreating and hydrodewaxing of raw, heavy petroleum fractions, such as vacuum gas oil, in a single stage operation while obtaining products meeting both nitrogen and sulfur, and, in addition, reducing the pour point substantially. In some cases, further processing is unnecessary. The process of the present invention is economically advantageous, since it can eliminate subsequent processing steps which have heretofore been necessary. Moreover, if additional processing is necessary, the present process may make subsequent stages of a refining process more efficient. For example, if the product formed with the present process is required to be further hydrotreated, converted and dewaxed in a second or subsequent stage, the initial dewaxing performed in the present process will reduce the dewaxing requirements placed on the second stage catalyst (i.e., NiW or Pt on an inorganic oxide or zeolite support) and as a result, various advantages, such as the ability to utilize a lower temperature in the second stage or a lengthening of the useful life of the second stage catalyst, may be obtained. The present process reduces the number of process steps, or improves the efficiency, activity and viability of downstream processes.

Zeolite Beta is an effective catalyst for the hydrodewaxing of various petroleum fractions, including raw, heavy petroleum fractions, in that it effectively lowers the pour point of said fraction. It is also known in the art that cobalt-molybdenum or nickel-molybdenum on alumina is an extremely effective denitrogenation/desulfurization catalyst which can effectively lower the sulfur and nitrogen content of a particular feed, but which has very little, if any, effect on pour point. Applicants have discovered that a catalyst system which includes a hydrogenation component impregnated on a support comprising a minor portion of Zeolite Beta and a major portion of an inorganic oxide is capable of simultaneously hydrotreating and dewaxing a heavy feedstock, such as vacuum gas oil (VGO), in a single stage process. It has been found that the inclusion of Zeolite Beta in the support provides dewaxing activity as expected, but does not cause a deterioration in hydrotreating performance. The specific features of the catalyst system utilized in the present invention are discussed in greater detail below.

As noted above, the catalyst system of the present invention includes Zeolite Beta. Zeolite Beta is described in detail in U. S. Patent Nos. 3,308,069 and Re. 28,341. Zeolite Beta is a crystalline silicate zeolite having a pore size greater than 5 Angstroms. The composition of the zeolite in its as synthesized form may be expressed as follows:

$$[XNa(1.0\ 0.1-X)TEA]AlO_2.YSiO_2.WH_2O$$

where X is less than 1, preferably less than 0.75; TEA represents the tetraethylammonium ion; Y is greater than 5 but less than 100 and W is up to 60 (it has been found that the degree of hydration may be higher than originally determined, where W was defined as being up to 4), depending on the degree of hydration and the metal cation present. The TEA component is calculated by differences from the analyzed value of sodium and the theoretical cation to structural aluminum ratio of unity.

In the fully base-exchanged form, Beta has the composition:

$$[\frac{X}{n}M(1.0^{+}-0.1-X)H].AlO_2.YSiO_2.WH_2O$$

where X, Y and W have the values listed above and n is the valence of the metal M. As it is now more conventional to refer to the silica:alumina ratio of zeolites rather than to the silicon: aluminum ratio thereof, it should be noted that the foregoing formula may also be expressed as:

$$[\frac{X}{n}M(1.0\ 0.1-X)H].Al_2O_3.YSiO_2.WH_2O$$

where Y, which determines the silica:alumina ratio, is greater than 10. Thus, the numerical value of ratios expressed as "silica:alumina" will always be twice as great as the corresponding silicon:aluminum ratio of the zeolie. For example, a silicon:aluminum ratio of 100:1 corresponds to a silica:alumina ratio of 200:1. The ratios relating to Zeolite Beta referred to throughout the remainder of this description are expressed as silica:alumina.

In the partly base-exchanged form, which is obtained from the initial sodium form of the zeolite by ion-exchange without calcining, Zeolite Beta has the formula:

$$[\frac{X}{n}M(1.0\ 0.1-X)TEA]Al_2O_3.YSiO_2.WH_2O$$

When it is used in the present catalysts, the zeolite is at least partly in the hydrogen form in order to provide the desired acidic functionality for the cracking reactions which are to take place. It is normally preferred to use the zeolite in a form which has sufficient acidic functionality to give it an alpha value of 1 or more. The alpha value, a measure of zeolite acidic functionality, is described, together with details of its measurement, in U. S. Patent No. 4,016,218 and in J. Catalysis, Vol. VI, pages 278-287 (1966) and reference is made to these for such details. The acidic functionality may be controlled by base-exchange of the zeolite, especially with alkali metal cations, such as sodium, by steaming, by control of the silica: alumina ratio of the zeolite or by acid extraction of aluminum from the zeolite.

When synthesized in the alkali metal form, Zeolite Beta may be converted to the hydrogen form by formation of the intermediate ammonium form as a result of ammonium ion-exchange and calcination of the ammonium form to yield the hydrogen form. In addition to the hydrogen form, other forms of the zeolite wherein the original alkali metal has been reduced may be used. Thus, the original alkali metal content of the zeolite may be replaced by ion-exchange with other suitable metal cations, including, by way of example, platinum, nickel, copper, zinc, palladium, calcium or rare earth metals.

Zeolite Beta, in addition to possessing a composition as defined above, may also be characterized by its X-ray diffraction data, which are set out in U. S. Patent Nos. 3,308,069 and Re. 28,341. Zeolite Beta may be prepared with very high silica:alumina ratios, e.g., 250:1 or 500:1 or higher may be obtained.

The silica:alumina ratios referred to in this specification are the structural or framework ratios, that is, the ratio of the $SiO_4$ to the $AlO_4$ tetrahedra, which together constitute the structure of which the zeolite is composed. It should be understood that this ratio may vary from the silica:alumina ratio determined by various physical and chemical methods. For example, a gross chemical analysis may include aluminum, which is present in the form of cations associated with the acidic sites on the zeolite, thereby giving a low silica:alumina ratio. Similarly, if the ratio is determined by the thermogravimetric analysis (TGA) of ammonia desorption, a low ammonia titration may be obtained if cationic aluminum prevents exchange of the ammonium ions onto the acidic sites. These disparities are particularly troublesome when certain treatments, such as the dealuminization method described below which result in the presence of ionic aluminum free of the zeolite structure, are employed. Due care should therefore be taken to ensure that the framework silica: alumina ratio is correctly determined.

The silica:alumina ratio of the zeolite may be determined by the nature of the starting materials used in its preparation and their quantities relative to one another. Some variation in the ratio may therefore be obtained by changing the relative concentration of the silica precursor relative to the alumina precursor, but definite limits in the maximum obtainable silica:alumina ratio of the zeolite may be observed. For Zeolite Beta, this limit is usually 200:1 (although higher ratios may be obtained) and, for ratios above this value, other methods are usually necessary for preparing the desired high silica zeolite.

Dealumination of the zeolite may be done by contacting the zeolite with an acid, preferably a mineral acid, such as hydrochloric acid. The dealuminization proceeds readily at ambient and mildly elevated temperatures and occurs with minimal losses in crystallinity, to form high silica forms of Zeolite Beta, with silica: alumina ratios of 200:1 or even higher being readily obtainable. The details of this method are given in European Patent Application Number 833027766, Publication Number 0095304.

The zeolite is conveniently used in the hydrogen form for the dealuminization process, although other cationic forms may also be employed, for example, the sodium form. If these other forms are used, sufficient acid should be employed to allow for the replacement by protons of the original cations in the zeolite. The amount of zeolite in the zeolite/acid mixture should generally be from 5-60% by weight.

If desired, the zeolite may be steamed prior to acid extraction so as to increase the silica:alumina ratio and render the zeolite more stable to the acid.

The hydrogenation/dehydrogenation component includes one or more metals selected from Group VIII and Group VIA. A combination of NiO and $MoO_3$ has been found to be particularly suitable. However, other Group VIII and Group VIA metals and their oxides and sulfides may be utilized. The preferred Group VIII metals include iron, nickel and cobalt, with nickel and cobalt being especially preferred.

The metals of Group VIII commonly known as the "noble" metals (e.g., palladium and platinum) are less effective in desulfurizing and denitrogenating the feeds treated in the present invention. These metals are more expensive and more subject to poisoning than are iron, nickel and

cobalt. Thus, the non-noble metals of Group VIII are preferred as a hydrogenation/dehydrogenation component. As the overall effectiveness of catalyst systems containing non-noble metals is greater, the following description relating to the Group VIII metals content is oriented to non-noble metals from Group VIII. If noble metals are used, a suitable range for noble metal content is 0.1 to 5 wt%.

The Group VIA and Group VIII metal content of the present catalyst system range from 0.1 to 10 wt % of Group VIII metal and from 1 to 20 wt % of Group VIA metal. The preferred amount of Group VIII metal is 1 to 5 wt %. The preferred amount of Group VIA metal is 5 to 20 wt %. A combination of 1 to 5 wt % nickel as an oxide and 5 to 20 wt % molybdenum as an oxide is particularly preferred. The foregoing amounts of metal are given in percent by weight of the catalyst on a dry basis, and are expressed in elemental form.

The support of the present catalyst system preferably comprises gamma alumina, but may comprise other inorganic oxides, e.g., silica, silica and alumina, silica-magnesia, silica-zirconia, silica-thoria, silica-beryllia, silica-titania, silica-alumina-thoria, silica-alumina-zirconia, silica-alumina-magnesia and silica-magnesia-zirconia. The support may also comprise naturally occurring clays, such as those of the montmorillonite and kaolin families, which families include the sub-bentonites and the kaolins commonly known as Dixie, McNamee-Georgia and Florida clays, or others in which the main mineral constituent is halloysite, kaolinite, dickite, nacrite or anauxite. Such clays can be used as mined or subjected to calcination, acid treatment or chemical modification.

The alumina used preferably allows the catalyst as a whole to meet the pore size distribution requirements mentioned. An alumina which has been found to be particularly suitable is PA alumina powder manufactured by American Cyanamid Company. Other commercially available aluminas, such as Kaiser SA and Catapal SB, may be used, but can be expected to give somewhat different pore size distributions. However, these can be modified to obtain similar pore size distributions.

It is beneficial if the catalyst has about 90% of its pore volume in pores no greater than 100 A in diameter. It has been found that this pore size distribution feature is helpful in balancing the hydrodewaxing and hydrodesulfurization activity of the catalyst system, as well as generally improving the properties and performance of the catalyst.

The Zeolite Beta content of the support, based on the dry weight of Zeolite Beta and inorganic oxide, is usually 0.5 to 30 wt %, preferably from 1 to 20 wt %.

The inorganic oxide, e.g., alumina content of the support is usually 99.5 to 70 wt %, based on the dry weight of zeolite beta and inorganic oxide.

The metals content, which is defined as including both the Group VIA metal and the Group VIII metal, most preferably nickel and molybdenum, can range from 6 to 25 wt %, expressed in elemental form, based on total catalyst. The relative proportion of Group VIII metal to Group VIA metal in the novel system of this invention is not narrowly critical, but Group VIA, e.g., molybdenum, is normally utilized in greater amounts than the Group VIII metal, e.g., nickel.

The catalyst may be prepared, e.g., by mixing Zeolite Beta with an inorganic oxide, extruding, calcining, exchanging to low sodium content, drying, impregnating with a Group VI metal salt solution, drying, impregnating with a Group VIII metal salt solution, and re-calcining. Other methods can be used, e.g., mix-mulling of the Zeolite Beta, inorganic oxide support and hydrogenation/dehydrogenation component, followed by extruding and calcining; the extrudate would then be exchanged to low sodium and recalcined. The exchange of extrudate to low sodium may be eliminated if the Zeolite Beta itself has been exchanged to low sodium prior to the mixing with alumina for extrusion.

The present process may be utilized, for example, to upgrade wide cut petroleum distillate to low pour point middle distillates in processes of the type described in U. S. Patent No. 4,089,775.

The process is most effective in treating feedstocks having a sulfur content of at least 1%. The present process is further characterized in that it is adapted to treat a feedstock that is completely distillable, and in that it converts less than 15% of the feedstock to lighter materials.

The process conditions utilized to practice the process of the invention will vary depending on the particular feedstock being treated and the desired specifications for the treated product. In general, the process conditions utilized will include a hydrogen pressure of 3,500 to 21,000 kPa (500-3000 psig), a temperature of 316 to 454°C (600°-850°F), and a liquid hourly space velocity (LHSV) of 0.1-5 based on the total complement of catalyst in the system.

The process of this invention will now be illustrated with reference to Figs. 1-3.

Fig. 1 illustrates a flow diagram for a desulfurization, denitrogenation and dewaxing process in which the feed, which may be any distillable petroleum based stock, such as vacuum gas oil, is introduced by line 1 with hydrogen via line 2 to furnace 10 and preheated to a desired processing temperature. The heated stock is then passed via line 11 to reactor 20. Reactor 20 includes a catalytic hydrocracking zone, comprising the catalyst of the present invention, at conditions effective to convert in a single pass 15% of the feed to materials boiling below the initial boiling point of the feed. The effluent from reactor 20, including excess hydrogen, will contain some free hydrogen sulfide and ammonia, since the hydrocracking zone also desulfurizes, denitrogenates and dewaxes. The effluent is passed via line 21 to a high pressure gas-liquid separator 30. A hydrogen rich phase exits separator 30 via line 31 and is recycled to the reactor via line 2. The liquid phase is passed via line 32 to low pressure separator 40. Some of the liquid flashes to form a gas phase which is removed via line 41. The liquid remaining exits via line 42. The process of Fig. 1 leaves much relatively light material in the liquid phase from the low pressure separator and thus produces a low pour point distillate product.

Fig. 2 illustrates upgrading FCC feed. The process is the same as illustrated in Fig. 1 except that the liquid phase from low pressure separator 40 is passed via line 42 to fractionator 50 which produces a heavy liquid FCC feed via line 51, a naphtha, via line 52, and distillates, via line 53. This produces a low pour distillate and hydrotreated FCC feed.

Fig. 3 illustrates a flow diagram for a moderate-pressure hydrocracking process. The reactor comprises catalytic dewaxer reactor 22 and catalytic hydrodesulfurization reactor 24. Feed enters catalytic dewaxer reactor 22 and is catalytically dewaxed under moderate pressure by the catalyst of the present invention. The realtor effluent is passed via line 23 to catalytic hydrodesulfurization reactor 24 where additional hydrodesulfurization occurs. The effluent from reactor 24 passes through high pressure separator 30 via line 25 and low pressure separator 40 to fractionator 50. Fuel oil is recovered as a bottoms fraction via line 54. The process of the present invention allows the process to be conducted at less severe operating conditions than disclosed in the prior art.

The invention is illustrated by the following examples. All percentages and parts are by weight unless otherwise indicated.

Example 1

A catalyst of 3% NiO and 15% $MoO_3$, impregnated on a support of 15% unsteamed Zeolite Beta (Si/Al = 32) and 85% $Al_2O_3$, was prepared as follows: 175 grams of 1.6mm (1/16") diameter, calcined 15% Zeolite Beta - 85% $Al_2O_3$ extrudate were impregnated to incipient wetness with 127 ml of ammonium heptamolybdate solution, dried at 121°C (250°F) and re-impregnated with 109 ml of nickel(ous) nitrate solution. The product was dried and then calcined in flowing air for 3 hours at 538°C (1000°F). The Zeolite Beta in the calcined extrudate was considered to be in the $H^+$ form and had an alpha activity of 358.

The alumina was PA alumina powder, a product of American Cyanamid Company.

Example 2

A conventional catalyst of 3% NiO and 15% $MoO_3$ on a PA alumina support was prepared as follows: 93.5 grams of 1.6mm (1/16") diameter, calcined 100% alumina cylinders were impregnated to incipient wetness with 71 ml of ammonium molybdate solution, dried at 121°C (250°F), and then re-impregnated with 61 ml of nickel(ous) nitrate solution. The product was dried at 121°C (250°F) and then calcined in flowing air for 3 hours at 538°C (1000°F).

A comparison of the physical properties of the catalysts is set forth in Table 1 below.

TABLE 1

| | Catalyst | |
|---|---|---|
| Property | Example 1 | Example 2 |
| Density (g/cc) | | |
| Packed | 0.70 | 0.74 |
| Particle | 1.20 | 1.22 |
| Real | 3.40 | 3.95 |
| Pore Volume | 0.538 | 0.566 |
| Surface Area ($m^2/g$) | 298 | 242 |
| Average Pore Diameter (A) | 72 | 94 |
| Pore Size Distribution (PSD) | | |
| % of Pore Volume in Pores of | | |
| 0-30 (A) Dia. | 10 | 11 |
| 30-50 | 11 | 6 |
| 50-80 | 44 | 29 |
| 80-100 | 28 | 43 |
| 100-150 | 3 | 8 |
| 150-200 | 1 | 1 |
| 200-300 | 1 | 0 |
| 300+ | 2 | 2 |

Example 3

The catalysts of Examples 1 and 2 were evaluated for hydrotreating vacuum gas oil (VGO) in a batch shaker bomb unit. The test conditions used were:

| | |
|---|---|
| VGO, g | 150 |
| Catalyst, g | 20 |
| Temperature, °F/°C | 710/377 |
| Pressure (Hydrogen), psig | 1000 |
| kPa | 7000 |
| Reaction Time, min. | 100 |

The liquid product was topped to yield a 343°C (650°F+) fraction for analysis. The results are shown in Table II:

TABLE II

| | Charge | Catalyst Example 1 | Catalyst Example 2 |
|---|---|---|---|
| Nitrogen (ppm) | 830 | 350 | 400 |
| Sulfur (wt %) | 2.34 | 0.415 | 0.435 |
| Pour Point (°F) | 100/38 | 70/21 | 95/35 |
| Boiling Range (°F) | | | |
| at 1% | 555/291 | 670/354 | 624/329 |
| 5 | 623/328 | 703/373 | 657/347 |
| 25 | 744/396 | 774/412 | 743/395 |
| 50 | 837/447 | 847/453 | 825/441 |
| 95 | 1030/554 | 1020/549 | 1008/542 |
| Reductions | | | |
| % Denitrogenation | - | 58 | 52 |
| % Desulfurization | - | 83 | 82 |
| Pour Point Lowering (°F) | | 30 | 5 |
| (°C) | | 17 | 3 |

The catalyst of Example 1, containing Zeolite Beta, provided excellent denitrogenation and desulfurization, and also reduced the pour point by 17°C (30°F). In contrast, the conventional catalyst of Example 2 gave good denitrogenation and desulfurization, but only produced a minimal reduction in pour point. These catalysts had similar pore size distributions, about 90% of the pore volume of each catalyst was in pores smaller than 100 Angstrom units in diameter.

**Claims**

1. A process for simultaneously denitrogenating, desulfurizing and dewaxing a distillable petroleum feed having nitrogen compound, waxy components and a sulfur content of at least 1.0 wt% and a boil above 260°C by contacting the feed with a catalyst comprising: a support of 0.5 to 30 wt% Zeolite Beta and 99.5 to 70 wt% of an inorganic oxide; and a hydrogenation/dehydrogenation component of 6 to 25 wt%, based on total catalyst weight and expressed in elemental form, of at least one Group VIII metal selected

from iron, cobalt and nickel and at least one Group VIA metal, and converting less than 15% of the feed to lighter materials, to produce a liquid product with reduced wax, nitrogen and sulfur content.

2.The process of Claim 1 wherein the inorganic oxide comprises alumina.

3.The process of Claim 1 or 2 wherein the catalyst has 90% of its pore volume in pores no greater than 100 Angstrom units in diameter.

4.The process of any of Claims 1 to 3, wherein the support includes 1 to 20 wt% Zeolite Beta and 99 to 80 wt% inorganic oxide material.

5.The process of any of Claims 1 to 4, wherein the hydrogenation/dehydrogenation component includes 1 to 5 wt % Group VIII metal and 5 to 20 wt % Group VIA metal.

6.The process of any of Claims 1 to 5, wherein the Group VIII metal is nickel and the Group VIA metal molybdenum.

7.The process of Claim 6, wherein the nickel is nickel oxide and the molybdenum is molybdenum oxide.

8.The process of any of Claims 1 to 7, wherein the contacting is carried out in the presence of hydrogen gas at a total pressure of 3,500 to 21,000 kPa (500-3000 psig), a temperature of 316 to 454 °C (600°-850°F), and a liquid hourly space velocity of 0.1 to 5 based on the total complement of catalyst in the system.

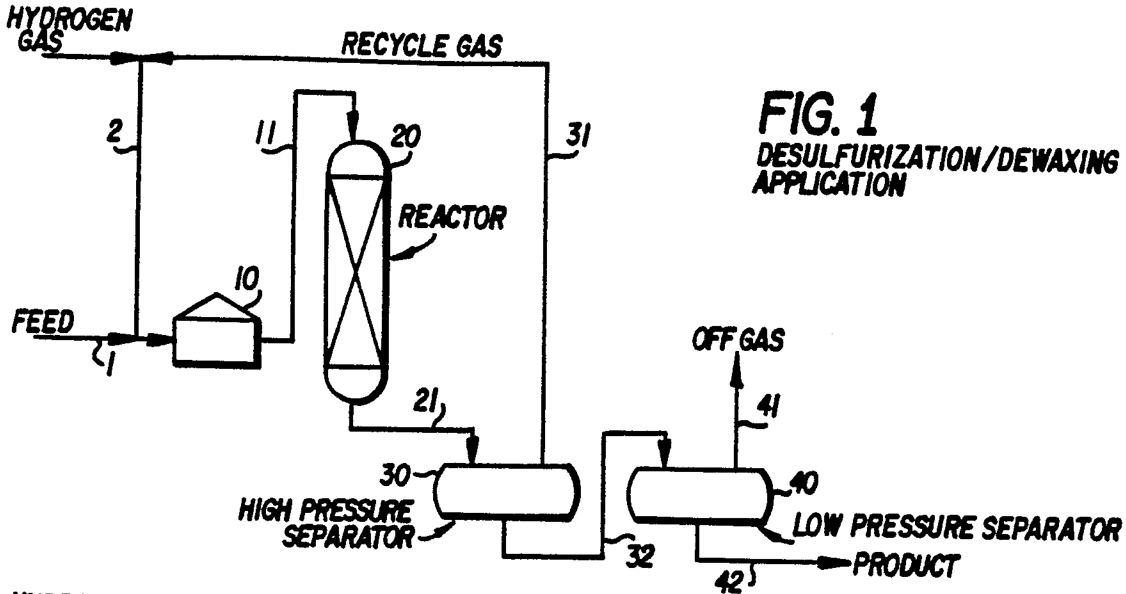


FIG. 1
DESULFURIZATION/DEWAXING APPLICATION

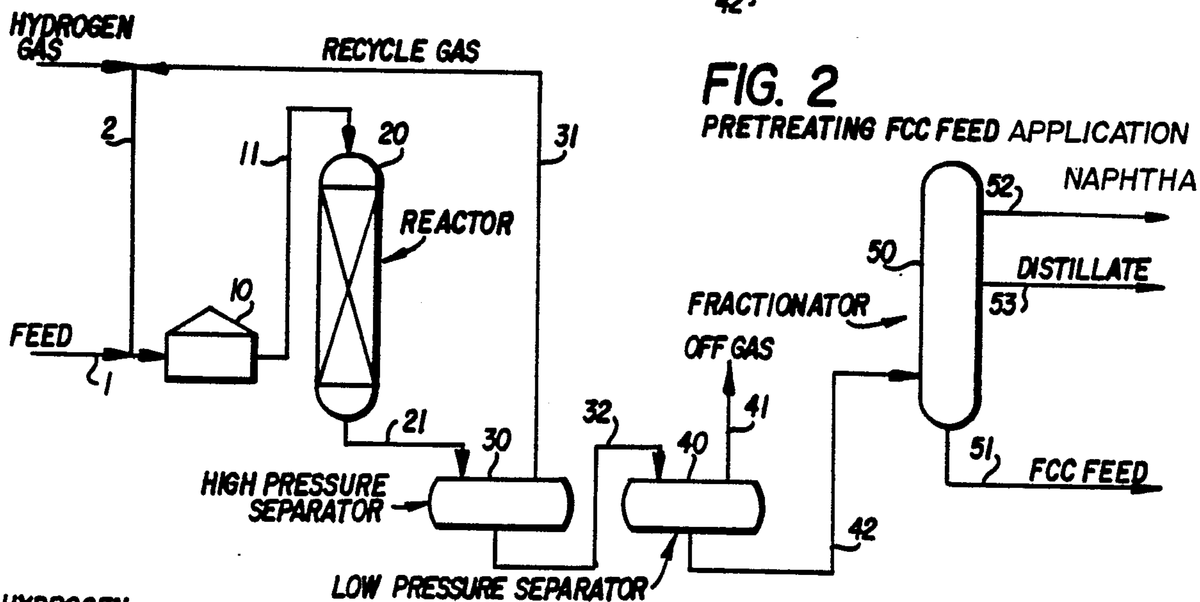


FIG. 2
PRETREATING FCC FEED APPLICATION

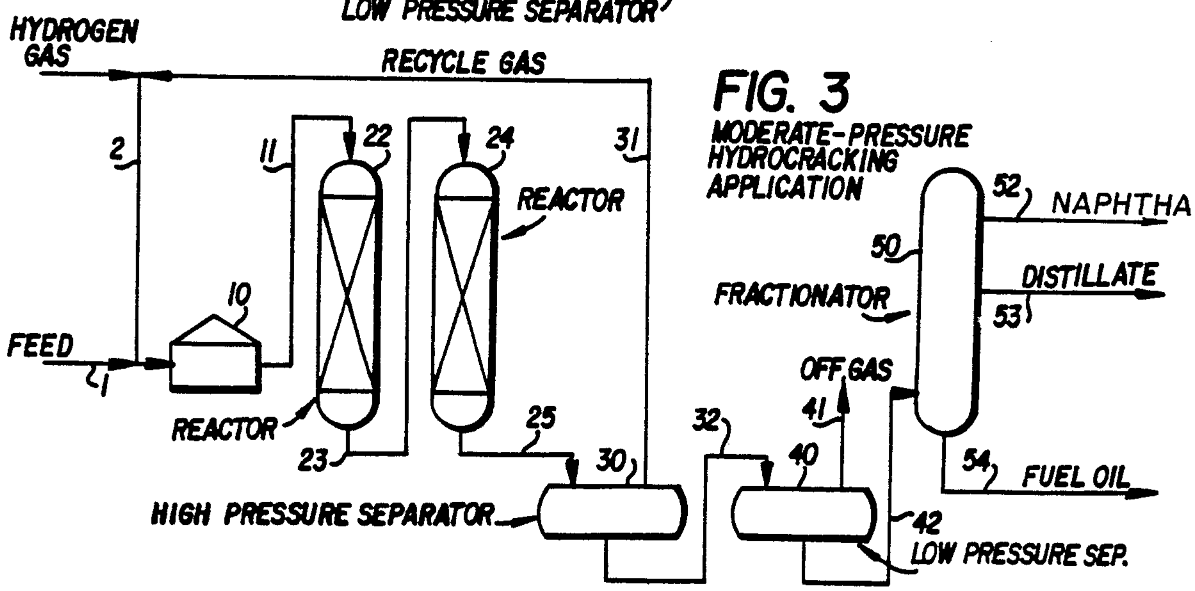


FIG. 3
MODERATE-PRESSURE HYDROCRACKING APPLICATION

European Patent Office

# EUROPEAN SEARCH REPORT

Application number

EP 85 30 7240

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,Y | US-A-4 419 220 (LA PIERRE et al.) * Claims 1-10; column 6, lines 51-69; column 7, lines 35-47 * | 1-8 | C 10 G 45/64<br>B 01 J 29/34 |
| D,Y | US-A-4 458 024 (OLECK et al.) * Claims 1,2,5,6; table 3 * | 1-8 | |
| A | EP-A-0 094 827 (MOBIL OIL) * Claims 1-5; page 12, paragraph 1 * | | |
| D,A | US-A-3 894 938 (GORRING) * Claims 1-4 * | | |
| | | | TECHNICAL FIELDS SEARCHED (Int. Cl.4) |
| | | | C 10 G<br>B 01 J |

The present search report has been drawn up for all claims

| Place of search | Date of completion of the search | Examiner |
|---|---|---|
| THE HAGUE | 04-12-1985 | MICHIELS P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82